# EUROPÄISCHE PATENTSCHRIFT

(11) **EP 2 522 476 B1**
(45) Veröffentlichungstag und Bekanntmachung des Hinweises auf die Patenterteilung: **30.08.2017**
(21) Anmeldenummer: 12167224.0
(22) Anmeldetag: 09.05.2012
(51) Int. Cl.: B27D 5/00, B29C 63/00

(54) **Verfahren zur Herstellung eines beschichteten Plattenelementes aus Holzwerkstoff mit einem Kantenstreifen.**
Method for producing a coated board element from a wooden material with an edge strip.
Procédé de fabrication d'un élément de plaque revêtu en matière dérivée du bois avec une bande de rebord.

(30) Priorität: 12.05.2011 DE 102011050311
(43) Veröffentlichungstag der Anmeldung: 14.11.2012
(73) Patentinhaber: Bio-Circle Surface Technology GmbH, 33334 Gütersloh (DE); RMB GmbH, 33335 Gütersloh (DE)
(72) Erfinder: Gasch, Marcus, 32584 Löhne (DE)
(74) Vertreter: Flötotto, Hubert

(56) Entgegenhaltungen:
- EP-A2- 1 516 711
- DE-A1-102005 024 005
- DE-A1-102006 019 184
- DE-A1-102007 005 532
- DE-B3-102005 061 245
- DE-C1- 10 006 661
- DE-C1- 10 042 431
- DE-U1- 20 314 850

## Beschreibung

Verfahren zur Herstellung eines beschichteten Plattenelementes aus Holzwerkstoff mit einem Kantenstreifen gemäß dem Oberbegriff des Anspruchs 1. Ein solches Verfahren ist aus dem Dokument DE20314850U1 bekannt.

### Technisches Umfeld

Die Erfindung betrifft ein Verfahren zur Herstellung eines beschichteten Plattenelementes aus Holzwerkstoff mit einem Kantenstreifen, der mit einem Kleber vorzugsweise Schmelzkleber an den unbeschichteten Kantenbereich des Plattenelementes befestigt wird, und wobei der auf einer Rolle vorgehaltene Kantenstreifen mit einem geringen Übermaß mit seiner Klebeseite an den mit Kleber beschichteten Kantenbereich des Plattenelementes angedrückt wird, und wobei der aus der Klebefuge während des Abbindeprozesses in Folge des aufgebrachten Drucks austretende Kleber sowie das Übermaß des Kantenstreifens von den Kantenbereichen des Plattenelements an der Oberseite und/oder der Unterseite entfernt wird.

### Stand der Technik

Aus dem Stand der Technik sind Vorrichtungen aber auch Verfahren bekannt, die insbesondere die Anbringung eines Streifens an den Kantenbereich einer beschichteten Platte beschreiben. So wird beispielsweise in der DE 297 09 780 eine Vorrichtung zum Anleimen eines Kunststoff- oder Furnierstreifens an die Kante einer beschichteten Platte aus Holzwerkstoff im Durchlaufverfahren beschrieben. Dabei wird mit einem Streifenzulauf und einer in Transportrichtung gesehenen angeordneten Andruckrolle der Kantenstreifen aufgetragen und angedrückt. Bei dieser Art des Anbringens des Kantenstreifens treten seitlich Leim- oder Klebstoffreste aus, die sich mit der Beschichtung der jeweiligen Ober- und Unterseite der Platte verbinden. Diese Leim- oder Klebstoffreste müssen dann nachfolgend in aufwendiger Handarbeit beseitigt werden. Zur Vermeidung dieser aufwendigen Nacharbeitung wird nach dem Stand der Technik vorgeschlagen, dass vor dem Streifenzulauf eine Sprüheinrichtung vorgesehen wird, mit der ein flüssiges Trennmittel auf den ober- und unterseitigen Kantenbereich der jeweiligen Plattenbreitseite aufgesprüht wird. Das Trennmittel soll hierbei vornehmlich den Aufwand verringern, wenn beispielsweise mechanische Reinigungseinrichtungen, wie so genannte Schwabbelscheiben die Leimreiste entfernen, um auf diese Weise den qualitativen Anforderungen an die Platte gerecht zu werden, so dass eine Oberfläche im Kantenbereich geschaffen wird, die keine Rückstände mehr aufweist.

Eine weitere Ausführungsform des Standes der Technik wird in der DE 34 15 053 beschrieben, wobei bei diesem bekannten Verfahren vorgeschlagen wird, ein Anleimen von Kantenstreifen mittels Schmelzkleber an die verschiedensten Kantenprofile im Einlegesystem bereitzustellen, in dem im Stoßbereich zwischen Kantenstreifen und Werkstück kein Schmelzkleber austreten kann, so dass dadurch eine sichtbare Leimfuge entsteht, und somit die Nachbearbeitung der Werkstückoberfläche einwandfrei durchführbar ist. Hierbei wird im Durchlaufverfahren der Kantenstreifen mit Schmelzkleber beschichtet und dann durch Andruckrollen an die Kante gedrückt, wobei der Kantenstreifen eine größere Breite hat als die Querschnittslänge der Profilfläche, so dass er übersteht. Nachdem der Kantenstreifen mit einem Teilbereich seiner Breite an die Profilfläche angedrückt worden ist, wird der Schmelzkleber im noch nicht angeklebten Kantenstreifenbereich abgekühlt und dann genau passend abgeschnitten. Somit wird ein passgenauer Kantenstreifen an eine profilierte Kante vorgesehen.

Aus der WO 0018565 ist ebenfalls die Herstellung eines beschichteten Plattenelementes bekannt. Gemäß dem Verfahren zur Herstellung eines beschichteten Plattenelementes mit mindestens einer einen auslaufenden Rand aufweisenden beschichteten Schmalfläche wird durch Anleimen ein bandförmiger Belag an die Schmalfläche (Kante) des beschichteten Plattenelementes, der in seiner Breite größer als die zu beschichtende Breite der Schmalfläche ausgeführt ist, unter Druck anklebt, wobei der Überstand des Belags abtrennt wird, nachdem man den Schmelzklebstoff am Überstand des Belags abgekühlt hat. Um ein Verschmieren des Randes der beschichteten Breitfläche des Plattenelementes zu vermeiden, wird nach dem Verfahren vorgeschlagen, dass man zunächst den Belag vollständig an die zu beschichtende Breite der Schmalfläche anpresst, bevor man den Schmelzklebstoff am Überstand des Belags abkühlt und schließlich den Überstand abtrennt. Beim Durchlaufen wird der Schmelzklebstoff hierbei abgekühlt, wobei als Kühlmittel Wasser in Form von fein verteilten Tröpfchen zum Einsatz kommt.

Eine weitere Ausführungsform eines Verfahrens des Standes der Technik ist in der DE 100 42 431 beschrieben. Nach dem Verfahren wird ebenfalls der Überstand des Kantenbandes mittels eines Kantenbandfräsers abgefräst. Dabei wird vor dem Abfräsen auf das Kantenband und/oder die Platte ein eine elektrostatische Aufladung der benetzten Bereiche und/oder der Frässpäne verhinderndes Mittel aufgetragen. Aufgrund dieser Ausbildung soll erreicht werden, dass insbesondere die anfallenden Späne besser abgetragen werden, so dass die Qualität der Bearbeitung nach dem Kantenbandleimen verbessert wird. So können die entstandenen Frässpäne durch Absaugung, da sie nicht mehr an der Plattenoberfläche bzw. dem Kantenband anhaften, abgetragen werden. Das verwendete Mittel besteht dabei aus einer Mischung von Wasser, Alkohol und Tensid, welches die antistatische Wirkung auf der Oberfläche des Kantenbereichs bewirken soll.

Ein weiteres Dokument des Standes der Technik, die EP 1 516 711, offenbart ein Trennmittel sowie ein Verfahren zur Herstellung von Kunststoffformteilen aus Polyurethan, wobei zu ihrer Herstellung unter Einsatz bestimmter Zusatzmittel, die die Konzentration unerwünschter potenziell gesundheitsschädlicher Substanzen in der Randzone und an der Oberfläche der Formteiles verringern, ohne die übrigen mechanischen Eigenschaften negativ zu beeinflussen.

Aus dem Stand der Technik gemäß der DE 203 14 850 U1 ist ein Verfahren beschrieben zur Kantenbearbeitung mit einem flüssigen Trennmittel, das aus einem niedrig siedenden Spezialbenzin besteht, in dem ein fluides Trägermittel, vorzugsweise Weißöl gelöst ist. Die DE 100 06 661 C1 beschreibt ein Verfahren zum Nachbearbeiten eines Übergangs einer Kunststoffzier- und -schutzleiste in ein angrenzendes Flächenelement, bevorzugt Platte eines Möbelstücks, das auch einer maschinellen Durchlaufbearbeitung zugänglich sein kann. Dazu werden Überstände der Kunststoffzier- und -schutzleiste spanabhebend beseitigt, sodann wird zumindest die spanend bearbeitete Fläche mit einem Multikomponenten-Schmieröl mit hoher Kriechfähigkeit benetzt und anschließend der verbliebene Restüberstand mit Wafzenbürsten entfernt und ein glatter Übergang von Flächenelement und Kunststoffzier- und -schutzleiste gebürstet. Auch die DE 10 2005 061 245 B3 beschreibt ein Verfahren, bei dem nach Anleimen eines Kunststoff- oder Furnierstreifens an die Kante einer Platte ein Trenn- oder Reinigungsmittel auf den ober- und unterseitigen Kantenbereich auf die jeweilige Plattenbreitseite ein Trenn- oder Reinigungsmittel in einem Streifen mit vorwählbarer Breite kantenbündig auf den ober- und unterseitigen Kantenbereich der jeweiligen Plattenbreitseite und/oder auf das Andruckelement aufgetragen werden kann.

Zu dem dokumentiert der Stand der Technik Substanzen nach der DE 10 2007 005 532 A1, die eine wässrige Formulierungen von Oligo- und Polyestern und deren Verwendung in Wasch- und Reinigungsmitteln in der Textilindustrie und in Kosmetika umfassen. Hingegen beschreibt die DE 10 2006 019 184 A1 die Verwendung einer wässrigen Polymerzusammensetzung als Bindemittel für faserförmige oder körnige Substrate. Diese Substanzen eignen sich jedoch nicht für den Einatz der vorgeschriebenen Verfahren.

Bei all diesen aus dem Stand der Technik beschriebenen Verfahren und deren verwendeten Trennmittel wird es als nachteilig angesehen, dass insbesondere die Verwendung eines Fluids, bestehend aus Wasser mit Alkohol und Tensiden, wie dies in der letztbeschriebenen Druckschrift vorgeschlagen wird, und welches als Antielektrostatikum wirken soll, über die Bearbeitungsschritte, wie Fräsen bzw. die Bearbeitung mit Flach- oder Profilziehklingen sowie die Bearbeitung mit Schwabbelaggregaten einen Restschmierfilm auf dem Kantenbereich verursacht, der nur unter hohem Aufwand und Reinigungseinsatz von dem Kantenbereich entfernt werden kann. Dies bedingt auch durch die überstehenden Kleberreste, die auf der Fläche in Verbindung mit der aufgetragenen Sprühflüssigkeit verrieben werden, so dass sich hier ein bleibender Schmierfilm bildet. Zudem beinhaltet das Fluid eine leicht entzündbare Substanz, was insbesondere den Umgang des Fluids bei der Lagerhaltung und dem Transport hinsichtlich der Gefahrengutverordnung erschwert. So ist es beispielsweise nur erlaubt das Fluid in explosionsgeschützten Räumen zu lagern.

### Aufgabe

Der vorliegenden Erfindung liegt daher die Aufgabe zugrunde, ein Verfahren sowie ein Mittel oder eine Substanz so auszubilden, die die geschilderten Nachteile überwindet, wobei insbesondere nach Durchlauf des beschichteten Plattenelementes kein Schmierfilm zurückbleibt, wobei die Substanz nicht brennbar sein soll, und die von den Vorschriften der Gefahrengutverordnung ausgenommen ist.

### Lösung

Erfindungsgemäß wird das Problem mit den Merkmalen des Anspruchs 1 gelöst; vorteilhafte Ausgestaltungen der Erfindung ergeben sich aus den Unteransprüchen.

Die mit der der Erfindung erreichten Vorteile bestehen im Wesentlichen darin, dass aufgrund des Auftragens einer Substanz, die insbesondere die Haftfähigkeit des Klebers beeinflusst, sichergestellt wird, dass die Kleberreste nicht mehr an der Oberfläche des Plattenelementes haftend verbleiben, sondern diese im Durchlaufprozess Partikel bilden, die sich leicht und einfach von der Fläche lösen oder abgetragen werden können. Die Substanz wird hierbei in Streifen auf die Kantenbereiche von Oberseite und Unterseite aufgetragen, wobei die Substanz als solches aus in Wasser dispergierten Polymeren besteht, welches auf den Kantenbereichen einen Wachsfilm bildet. So wird der Wachsfilm mit den enthaltenen Klebepartikeln mittels der als Schwabbeln ausgebildeten rotierenden Bürsten von den Flächen des Kantenbereichs entfernt.

Das Abtragen der nicht klebenden Partikel wird dadurch wesentlich begünstigt. Nach einer vorteilhaften Ausgestaltung der Erfindung wird vorzugsweise vor dem Bürsten ein zweiter Wachsfilm aufgetragen, zur Bildung eines Schutzfilms auf der Klebefuge.

Dabei besteht die Substanz aus einem lösemittelfreien und silikonfreien Mittel, welches auf einer Wasserbasis aufbaut. Das wachshaltige Mittel stellt eine Versiegelung sowie Beschichtung der Oberfläche bereit, die sowohl kühlt als auch die Flach- und Profilziehklingen und deren Gleitkufen schmiert. Infolge des Wachsfilms ergibt sich ein Kühlen und Schmieren von Flach- und Profilziehklingen und deren Gleitkufen, sowie ein Kühlen der sogenannten Schwabbelaggregate. Zudem ergibt sich ein Kühlen und Schmieren von Profil Druckstrecken im Soft oder direkt Postforming mit der Maßgabe überschüssige Kleberreste zu Deaktivieren und ein Wiederanhaften zu unterbinden.

Ein Wiederanhaften sowie nachträgliches Verschmutzen im klebenahen Bereich, zum Beispiel beim Lagern, des kantenbeschichteten Plattenelementes wird dadurch verhindert. Die Beschichtung verbleibt nach dem Schwabbeln als ein trockener grifffester Wachsfilm. Dabei verhindert der Wachsfilm auch ein Verkleben der Tastkufen, Gleitschuhe, Andruckrollen oder Tastrollen. Die Bearbeitungswerkzeuge bleiben frei von Kleberresten, was zu höheren Standzeiten der einzelnen Aggregate sowie einer besseren Reinigungswirkung führt.

Ein Verschmieren von Kleberesten auf der Oberfläche oder der Kante tritt nicht mehr auf. Zudem wird eine Kühlung der Kanten mit Verringerung des Anschmelzens beim Schwabbeln erreicht, was wiederum dazu führt, dass weniger Ausschuss und keine manuelle Nacharbeit erforderlich ist. Das Mittel wird durch Düsen im Randbereich des Werkstücks direkt nach bzw. während der Verklebung aufgetragen. Die Oberfläche wird mit in Wasser dispergierten Polymeren beschichtet und somit vor Verschmutzung geschützt. Der Kleber härtet dabei schneller aus. Durch den aufgesprühten Wachsfilm wird der Kleber deaktiviert und verliert seine klebende Eigenschaft, wobei auch die Reaktivierung des Klebers durch entstehende Wärme (durch Bearbeitungsreibung wie das Kantenfräsen) durch das im Mittel enthaltene Wachs verhindert wird. Dabei kann ein erneutes Auftragen der Substanz die Profil- und Ziehklinge kühlen, um somit entstehende Reibungswärme an der Klinge zu unterdrücken. Ein erneutes Aufsprühen der Substanz vor den Schwabbelaggregaten verhindert zudem Reibungswärme, die durch das Schwabbeln mit Sisal oder Tuch entsteht.

Die durchgängige Beschichtung von 15 bis 20 mm Breite gewährleistet die Sauberkeit der beschichteten Bereiche, wobei ein trockener aber wasserlöslicher Schutzfilm zurückbleibt.

### Beschreibung der Zeichnungen

Ein Ausführungsbeispiel der Erfindung ist anhand der nachstehenden Figuren näher beschrieben. Die Figuren zeigen:
- Figur 1: eine schematische Darstellung in Seitenansicht der Vorrichtung zur Durchführung des Verfahrens zur Herstellung eines beschichteten Plattenelementes aus Holzwerkstoff mit einem Kantenstreifen; und
- Figur 2: eine Draufsicht auf die Vorrichtung mit Plattenelement im Kantenbereich.

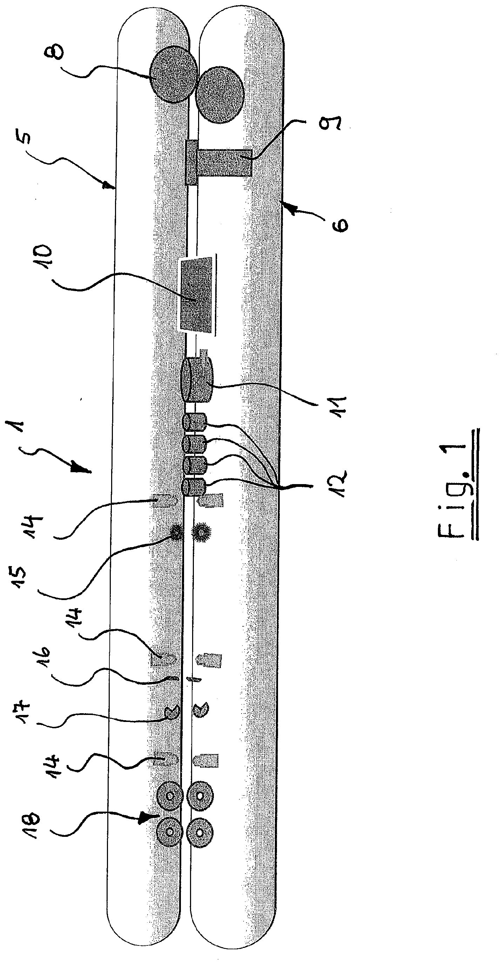

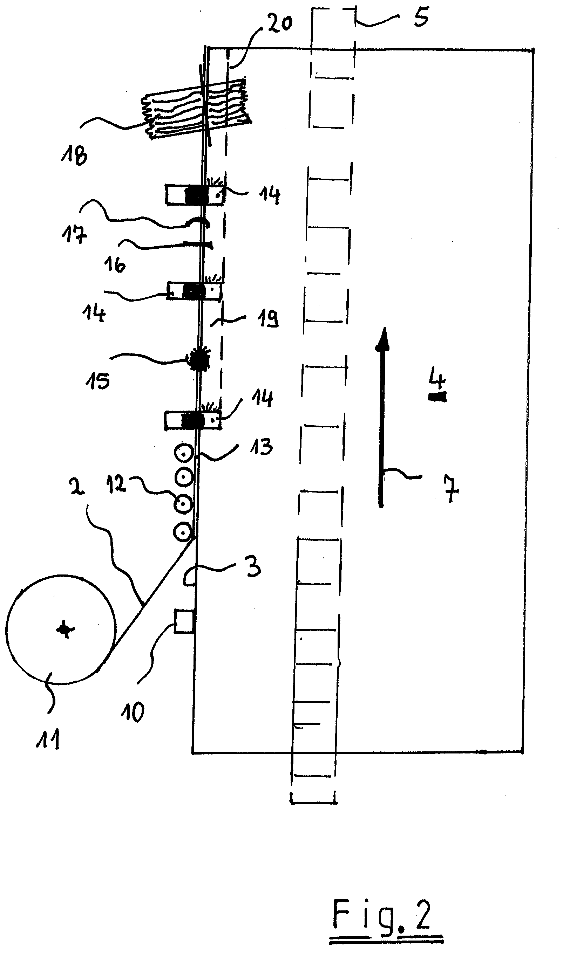

Die Figur 1 zeigt in Seitenansicht eine Vorrichtung 1, mit der ein Kantenstreifen 2 an den Kantenbereich 3 eines beschichteten Plattenelementes 4 angefügt wird. Die Vorrichtung 1 besteht hierbei aus übereinander angeordneten Endlosförderern 5 und 6, die das Plattenelement 4 gemäß der Pfeilrichtung 7 in Figur 2 durch die Vorrichtung 1 befördern. Am Einlauf der Endlosförderer 5 und 6 sind Formatiereinrichtungen 8 und 9 vorgesehen, die insbesondere das einlaufende Plattenelement 4 formatieren. Hinter der Formatiereinrichtung 8 und 9 schließt sich eine Beleimstation 10 an, die insbesondere auf den Kantenbereich 3 eine als Kleber ausgebildete Leimschicht aufträgt. Hinter der Beleimstation 10 erfolgt die Zuführung des Kantenstreifens 2, der von einer Rolle 11 abgewickelt wird, wie dies besser in der Figur 2 gezeigt wird. Mittels mehrerer Druckrollen 12 wird der Kantenstreifen 2 an den beleimten Kantenbereich 3 gedrückt. Hierbei wird aus der Klebefuge 13 Leim herausgedrückt, der mit einer aus Düsen 14 bestehenden Besprüheinrichtung mit einer Substanz benetzt wird. Den Düsen 14 nachgeschaltet sind Fräser 15, die insbesondere den überstehenden Bereich des angedrückten Kantenstreifens 2 abfräsen. Der abgefräste Kantenstreifen 2 wird anschließend jeweils mit Flach- und Profilziehklingen 16 und 17 glattgezogen, wobei das Finishing mit den Schwabbelscheiben oder Bürsten 18 vorgenommen wird, mit denen die aufgetragene Sprühschicht bzw. angefallenen Späne entfernt werden.

Nach dem erfindungemäßen Verfahren zur Herstellung des beschichteten Plattenelementes 4 aus Holzwerkstoff wird der Kantenstreifen 2 mit einem Kleber, vorzugsweise Schmelzkleber, an dem unbeschichteten Kantenbereich 3 des Plattenelementes 4 befestigt. Dabei wird der auf der Rolle 11 vorgehaltene Kantenstreifen 2 mit einem geringen Übermaß mit seiner Klebeseite an den mit Kleber beschichteten Kantenbereich 3 des Plattenelementes 4 angedrückt. Beim Andrücken des Kantenstreifens 2 tritt aus der Klebefuge 13 während des Abbindeprozesses infolge des aufgebrachten Drucks Kleber aus, der an der jeweiligen Oberfläche des Plattenelementes 4 aufquillt. Hierbei kann sich eine leicht überhöhte Kleberaupe an der der Ober- und Unterseite des Plattensegmentes 4 bilden.

Im weiteren Verfahrensschritt wird diese Kleberaupe mit dem Überstand des Kantenstreifens 2, der hier das Übermaß bildet, von dem Kantenbereich 3 des Plattenelementes 4 an der Oberseite und der Unterseite entfernt, was hier beispielsweise mit den Fräsern 15 oder mit der Profilziehklinge 17 vorgenommen wird. Dabei wird auf den Kantenbereich 3 von Oberseite und Unterseite des Plattenelementes 4 vor dem Abbindeprozess des Klebers eine Substanz aufgetragen, die die aus der Klebefuge 13 austretenden überschüssigen Klebereste in ihrer Haftwirkung deaktivieren, so dass sich nicht haftende Klebepartikel bilden, die beim Entfernen des überstehenden Kantenstreifens 2 vom Kantenbereich 3 mit entfernt werden.

Werden beispielsweise mit der Profilziehklinge 17 die Klebereste abgeschabt oder diese mit einem Fräser 15 abgefräst, so bilden sich Spänepartikel aus Kunststoff und Kleber, wobei diese von dem Wachsfilm 19 umschlossen werden, der in Streifenform 20 auf die Kantenbereiche 3 von Oberseite und Unterseite des Plattenelementes 4 aufgetragen wurde. Die sich in dem Wachsfilm 19 befindlichen Kleberreste werden dadurch in ihrer Kleberwirkung deaktiviert, so dass sie nicht mehr in der Lage sind an der Fläche des Plattenelementes 4 haften zu bleiben.

Dabei besteht die aufgesprühte Substanz aus einem in Wasser dispergierten Polymeren Fluid, welches auf dem Kantenbereich 3 einen Wachsfilm bildet. Der Wachsfilm wird mit den enthaltenen Kleberpartikeln mittels der als Schwabbel ausgebildeten rotierenden Bürsten 18 von der Fläche des Kantenbereichs 3 entfernt. Nach einer besonders vorteilhaften Ausgestaltung kann vorgesehen werden, dass vorzugsweise vor den Bürsten 18 ein zweiter Wachsfilm aufgetragen wird, zur Bildung eines Schutzfilms an der Klebefuge 13. Die Bürsten reiben dann die Wachspartikel in die Klebefuge 13 ein, so dass ein sauberer Abschluss zwischen Kantenstreifen 2 und beschichteter Ober- und Unterfläche hergestellt wird. Optional kann ein Wachsfilm auch vor den Klingen 16 und 17 aufgebracht werden.

### Bezugszeichenliste

- 1: Vorrichtung
- 2: Kantenstreifen
- 3: Kantenbereich
- 4: Plattenelement
- 5: Endlosförderer
- 6: Endlosförderer
- 7: Pfeilrichtung
- 8: Formatiereinrichtung
- 9: Formatiereinrichtung
- 10: Beleimstation
- 11: Rolle
- 12: Druckrollen
- 13: Klebefuge
- 14: Düse
- 15: Fräser
- 16: Flachziehklinge
- 17: Profilziehklinge
- 18: Bürste
- 19: Wachsfilm
- 20: Streifenform

## Patentansprüche

1. Verfahren zur Herstellung eines beschichteten Plattenelementes (4) aus Holzwerkstoff mit einem Kantenstreifen (2), der mit einem Kleber vorzugsweise Schmelzkleber an den unbeschichteten Kantenbereich (3) des Plattenelementes (4) befestigt wird, und wobei der auf einer Rolle (11) vorgehaltene Kantenstreifen (2) mit einem geringen Übermaß mit seiner Klebeseite an den mit Kleber beschichteten Kantenbereich (3) des Plattenelementes (4) angedrückt wird, und wobei der aus der Klebefuge (13) während des Abbindeprozesses in Folge des aufgebrachten Drucks austretende Kleber sowie das Übermaß des Kantenstreifens (2) von den Kantenbereichen des Plattenelementes (4) an der Oberseite und/oder Unterseite entfernt wird,
wobei auf die Kantenbereiche von Oberseite und/oder Unterseite des Plattenelementes (4) vor dem Abbindeprozess des Klebers eine Substanz aufgetragen wird, die die aus der Klebefuge (13) austretenden überschüssigen Kleberreste in ihrer Haftungswirkung deaktiviert, so dass sich nicht haftende Klebepartikel bilden, die beim Entfernen des überstehenden Kantenstreifens (2) vom Kantenbereich mit entfernt werden, **dadurch gekennzeichnet, dass** die Substanz in Streifen (20) auf die Kantenbereiche von Oberseite und Unterseite aufgetragen werden und die Substanz aus einem in Wasser dispergierten Polymeren Fluid besteht, welches auf dem Kantenbereich einen Wachsfilm bildet, der mit den enthaltenen Klebepartikeln mittels als Schwabbeln ausgebildeten rotierenden Bürsten (18) von den Flächen des Kantenbereichs entfernt wird, und wobei vorzugsweise vor den Bürsten (18) ein zweiter Wachsfilm auf getragen wird, zur Bildung eines Schutzfilms auf der Klebefuge (13).

## Claims

1. Method to manufacture a coated plate element (4) made of wooden material with an edge strip (2) that is attached at the uncoated edge area (3) of the plate element (4) using a glue, preferably hot-melt glue, and whereby the edge strip (2) kept on a roller (11) is pressed with its adhesive side onto the edge area (3) of the plate element (4) that is coated with glue, allowing for a slight excess in length, and whereby the glue flowing out of the glue joint (13) as a result of the exerted pressure during the setting process as well as the excess edge strip (2) is removed from the edge area of the plate element (4) at the upper side and / or lower side of it, whereby a substance is applied onto the edge areas of the upper side and / or the lower side of the plate element (4) prior to the glue's setting process, which deactivates the adhesive effect of the excess residual glue flowing out of the glue joint (13) so that no adhesive glue particles form that are also removed from the edge area when removing the overhanging edge strip (2), **characterized in that** the substance is applied in strips (20) onto the edge areas of the upper side and the lower side and the substance is composed of a fluid with polymers dispersed into water that forms a wax film on the edge area, which is removed from the surfaces of the edge area along with the adhesive particles it contains using rotating brushes (18) that are designed as buffers, and whereby a second wax film is applied to form a protective film on the glue joint (13), preferably prior to brushing with the brushes (18).

## Revendications

1. Procédés de fabrication d'un élément revêtu en forme de plaque (4) à partir de bois comme matière première et comportant une bande de chant (2) qui est fixée par une colle, de préférence une colle thermofusible, à la zone de chant non revêtue (3) de l'élément en forme de plaque (4) et dans lequel la bande de chant (2) gardée en réserve sur un rouleau (11) est comprimée avec un léger surdimensionnement par sa face de collage sur la zone de chant (3) revêtue de colle de l'élément en forme de plaque (4) et la colle sortant de la jointure de collage (13) pendant le processus de raccordement suite à la pression appliquée ainsi que le surdimensionnement de la bande de chant (2) étant éliminés sur les zones de chant de l'élément en forme de plaque (4) sur la face supérieure et/ou la face inférieure,
dans lequel, avant le processus de raccordement de la colle, est appliquée sur les zones de chant de la face supérieure et/ou de la face inférieure de l'élément en forme de plaque (4) une substance qui désactive l'effet d'adhérence des restes de colle excédentaire sortant de la jointure de collage (13), de sorte qu'il se forme des particules de colle non adhérentes qui, lors de l'enlèvement de la bande de chant proéminente (2) de la zone de chant, sont éliminées conjointement, **caractérisé en ce que** la substance est appliquée en bande (20) sur les zones de chant de la face supérieure et de la face inférieure et que la substance consiste en un fluide de polymère dispersé dans de l'eau qui constitue sur la zone de chant un film de cire qui est éliminé avec les particules de colle contenues, au moyen de brosses rotatives (18) réalisées sous forme de polissoirs, des surfaces de la zone de chant et dans lequel est appliquée de préférence en amont des brosses (18) un second film de cire destiné à former un film protecteur sur la jointure de collage (13).
